# EUROPÄISCHE PATENTSCHRIFT

(11) **EP 2 830 799 B1**
(45) Veröffentlichungstag und Bekanntmachung des Hinweises auf die Patenterteilung: **19.07.2017**
(21) Anmeldenummer: 13711039.1
(22) Anmeldetag: 20.03.2013
(51) Int. Cl.: B23B 51/00, B23B 51/10

(54) **BOHRER**
DRILL BIT
FORET DE PERÇAGE

(30) Priorität: 26.03.2012 DE 102012005919; 22.06.2012 DE 102012012479
(43) Veröffentlichungstag der Anmeldung: 04.02.2015
(73) Patentinhaber: MAPAL Fabrik für Präzisionswerkzeuge Dr. Kress KG, D-73431 Aalen (DE)
(72) Erfinder: KRENZER, Ulrich, 90513 Zirndorf (DE)
(74) Vertreter: Gleiss, Alf-Olav
(86) Internationale Anmeldenummer: PCT/EP2013/055796
(87) Internationale Veröffentlichungsnummer: WO 2013/143936

(56) Entgegenhaltungen:
- EP-A2- 2 239 075
- DE-U1- 29 901 414
- FR-A1- 2 552 694
- US-A- 1 747 117
- US-A- 4 580 933
- LEOPOLD SAUER: "Kombinationswerkzeuge", 1 January 1975 (1975-01-01), WERKZEUGE FÜR DIE AUTOMATISIERTE INNEN- UND AUSSENBEARBEITUNG, VOGEL-VERLAG, PAGE(S) I,43,47 - 53, XP003036006, ISBN: 978-3-8023-0552-8

## Beschreibung

Die Erfindung betrifft einen Bohrer gemäß Oberbegriff des Anspruchs 1, außerdem die Verwendung eines derartigen Bohrers gemäß Anspruch 8. Ein solcher Bohrer und eine solche Verwendung sind aus der EP 2 239 075 A2 bekannt. Bei der spanenden Bearbeitung von Werkstücken mittels eines hier angesprochenen Bohrers ist die Spanbildung auch bei langspanenden Werkstoffen beim Bohren ins Volle meist beherrschbar: Die Späne werden kurz gebrochen und in einzelnen Spanlocken sicher von der Schneide des Bohrers abtransportiert. Beim Aufbohren entstehen bei der Bearbeitung von langspanenden Werkstoffen oft lange Bandspäne, welche sich häufig um das Werkzeug wickeln und dessen weiteren Einsatz unmöglich machen. Dabei besteht auch das Risiko, dass der Bohrer abbricht und dass das Werkstück beschädigt wird. Um die Ausbildung derartiger Späne zu vermeiden, wird der Vorschub des Bohrers bei der Bearbeitung eines Werkstücks in vielen Fällen kurz unterbrochen oder reversiert. Dies führt aber zu längeren Bearbeitungszeiten und wegen der der wechselnden Beanspruchung des Bohrers zu erhöhtem Verschleiß. Bei der Ausbildung des Bohrers als Stufenbohrer, also bei der Kombination eines Vollbohrers mit einem Aufbohrer in einem einzigen Werkzeug, behindern sich die von den Vollbohr- und den Aufbohrschneiden abgetragenen Späne häufig und bilden ein Knäuel, was häufig zu einen Bruch des Werkzeugs oder zu Schäden an den Schneiden führt.

Aufgabe der Erfindung ist es daher, einen Bohrer der oben angesprochenen Art zu schaffen, bei dem die Ausbildung langer Späne oder die Knäuelbildung von Spänen auch bei der Bearbeitung von langspanenden Werkstoffen weitestgehend vermieden wird.

Zur Lösung dieser Aufgabe wird ein Bohrer mit den Merkmalen des Anspruchs 1 vorgeschlagen.

Besonders bevorzugt wird ein Ausführungsbeispiel des Bohrers, bei dem der Neigungswinkel der Schulterfläche der Spanformstufe in einem Bereich von -10 bis +10°, vorzugsweise von -5 bis +5 gewählt wird.

Ein weiteres bevorzugtes Ausführungsbeispiel zeichnet sich dadurch aus, dass der Schulterwinkel umso größer gewählt wird, je kleiner der Senkwinkel ist. Auf diese Weise lassen sich Form und Größe der bei der Bearbeitung eines Werkstücks entstehenden Späne gut beeinflussen, insbesondere können lange Späne und eine Knäuelbildung vermieden werden. Erfindungsgemäß ist ein zweiter Schneidbereich mit mindestens einer geometrisch definierten zweiten Schneide vorgesehen, sodass der Bohrer als Stufen- oder Aufbohrer verwendet werden kann. Dabei ist vorgesehen, dass der zweite Schneidbereich an der Stirnseite des Bohrers und der erste Schneidbereich in einem axialen Abstand dazu - gemessen in Richtung der Mittelachse - angeordnet ist. Dabei ist der Bearbeitungsdurchmesser des zweiten Schneidbereichs kleiner als der des ersten Schneidbereichs. Auch bei einer derartigen Ausgestaltung wird durch die Spanformstufe gewährleistet, dass auch bei der Bearbeitung langspanender Werkstücke lange Späne und Spanknäuel vermieden werden.

Weitere Ausführungsformen ergeben sich aus den Unteransprüchen. Zur Lösung der Aufgabe wird auch die Verwendung eines derartigen Bohrers als Stufen- oder Aufbohrwerkzeug vorgeschlagen.

Die Erfindung wird im Folgenden anhand der Zeichnung näher erläutert. Es zeigen:
- Figur 1: ein erstes Ausführungsbeispiel eines Bohrers in Seitenansicht;
- Figur 2: den Bohrer gemäß Figur 1 in einer stark vergrößerten zweiten Seitenansicht;
- Figur 3: den Bohrer nach den Figuren 1 und 2 im Querschnitt entlang der in Figur 2 wiedergegebenen Linie III-III und
- Figur 4: ein zweites Ausführungsbeispiel des Bohrers in Seitenansicht.

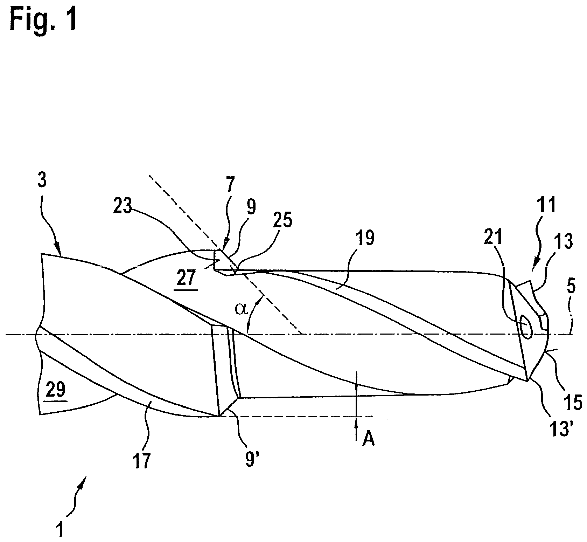

Figur 1 gibt ein erstes Ausführungsbeispiel eines Bohrers 1 wieder, und zwar dessen Vorderbereich. Er weist einen Werkzeugschaft 3 auf, welcher an seinem linken Ende abgebrochen ist. Er kann unmittelbar oder über einen bekannten Halteschaft auf übliche Weise mit einer Halterung gekoppelt werden. Im Betrieb des Bohrers, also bei Bearbeitung eines Werkstücks, findet eine Relativdrehung zwischen dem Werkstück und dem Bohrer statt. Üblicherweise wird der Bohrer 1 mit einer auch als Halterung dienenden Werkzeugspindel gekoppelt, entweder unmittelbar oder über Zwischenelemente, die in Rotation versetzt wird, sodass der rotierende Bohrer 1 mit einem feststehenden Werkstück in Eingriff gebracht werden kann, um eine Bohrung herzustellen oder aufzubohren beziehungsweise eine Stufenbohrung zu realisieren. Bei der Bearbeitung des Werkstücks rotiert der Bohrer 1 um seine Mittelachse 5.

Der in Figur 1 dargestellte Bohrer 1 weist einen ersten Schneidbereich 7 mit mindestens einer geometrisch definierten ersten Schneide 9 auf, die in einem radialen Abstand zur Mittelachse 5 angeordnet ist, sodass ein Flugkreis der ersten Schneide 9 und damit ein Bearbeitungsdurchmesser einer Bohrung definiert werden.

Der Bohrer 1 gemäß Figur 1 weist einen zweiten Schneidbereich 11 auf, der ebenfalls mindestens eine geometrisch definierte zweite Schneide 13 umfasst. Der radiale Abstand der zweiten Schneide 13 zur Mittelachse 5 ist kleiner als der radiale Abstand der ersten Schneide 9, sodass im zweiten Schneidbereich 11 ein kleinerer Bearbeitungsdurchmesser gegeben ist, als er im ersten Schneidbereich 7 erzeugt wird.

Figur 1 zeigt, dass der zweite Schneidbereich 11 an der Stirnseite 15 des Bohrers 1 angeordnet ist, während der erste Schneidbereich 7 in einem axialen Abstand dazu - gemessen in Richtung der Mittelachse 5 - vorgesehen ist.

Wird der in Figur 1 dargestellte Bohrer 1 zur Bearbeitung eines Werkstücks herangezogen, so tritt zuerst der zweite Schneidbereich 11 an der Stirnseite 15 des Bohrers mit dem Werkstück in Eingriff. Bei einem weiteren Vorschub des Bohrers 1 in Richtung der Mittelachse 5 gelangt auch der erste Schneidbereich 7 in Eingriff mit dem Werkstück, sodass die von dem zweiten Schneidbereich 11 erzeugte Bohrung von dem ersten Schneidbereich 7 bearbeitet wird. Die vom zweiten Schneidbereich 11 erzeugte Bohrung wird von dem ersten Schneidbereich 7, der, wie gesagt, einen größeren Bearbeitungsdurchmesser aufweist, aufgebohrt.

Der zweite Schneidbereich 11 an der Stirnseite 15 des Bohrers kann so ausgelegt sein, dass mit dem Bohrer 1 ins Volle gearbeitet werden kann. Denkbar ist es aber auch, eine bestehende Bohrung mit dem zweiten Schneidbereich 11 aufzubohren und eine weitere Erweiterung des Innendurchmessers der Bohrung mit dem ersten Schneidbereich 7 zu bewirken. Wird der Bohrer 1 vollständig durch ein Werkstück hindurchgeführt, kommen also sowohl der zweite Schneidbereich 11 als auch der erste Schneidbereich 7 über die gesamte Länge einer Bohrung in einem Werkstück in Einsatz, so erfolgt mittels des hier dargestellten Bohrers 1 eine Aufbohrung einer Bohrung in einem Werkstück.

Denkbar ist es aber auch, den Bohrer 1 um seine Mittelachse 5 rotieren zu lassen und ein Werkstück zu bearbeiten, ohne dass der Bohrer 1 durch dieses hindurchgeführt wird. Dadurch wird mit dem zweiten Schneidbereich 11 eine Bohrung mit einem ersten Durchmesser erzeugt oder bearbeitet und mit dem ersten Schneidbereich 7 diese Bohrung aufgebohrt, sodass ein Bohrungsabschnitt mit einem größeren Innendurchmesser entsteht, als er im Bereich der Bohrung gegeben ist, der mit dem zweiten Schneidbereich 11 bearbeitet wurde. In diesem Fall wird der Bohrer 1 als Stufenbohrer verwendet.

Bei der Bearbeitung einer Bohrung stützt sich der Bohrer 1 über mindestens eine Führungsfase ab. Bei dem hier dargestellten Ausführungsbeispiel sind eine erste Führungsfase 17 im Anschluss an den ersten Schneidbereich 7 vorgesehen und eine zweite Führungsfase 19 für den zweiten Schneidbereich 11. Vorzugsweise ist für jede Schneide, die in den Schneidbereichen vorgesehen ist, je mindestens eine Führungsfase vorgesehen, über die sich der Bohrer 1 an der Innenfläche einer Bohrung abstützt.

Um die Bearbeitungsgeschwindigkeit zu erhöhen und um die in den Bohrer 1 eingeleiteten Schnittkräfte besser zu verteilen, sind sowohl im ersten Schneidbereich 7 als auch im zweiten Schneidbereich 11 jeweils zwei paarweise gegenüberliegende Schneiden vorgesehen. Im ersten Schneidbereich 7 ist also oben in Figur 1 eine erste Schneide 9 erkennbar, welcher eine unterhalb der Mittelinie 5 gegenüberliegende identisch ausgebildete Schneide 9' zugeordnet ist.

Entsprechend ist im zweiten Schneidbereich 11 diametral gegenüberliegend zur zweiten Schneide 13 eine identische Schneide 13' vorgesehen.

Da die beiden gegenüberliegenden Schneiden im ersten und zweiten Schneidbereich identisch ausgebildet sind, wird im Folgenden jeweils nur auf eine der beiden eingegangen.

Figur 1 ist noch zu entnehmen, dass der Bohrer 1 vorzugsweise eine Kühl-/Schmiermittelzufuhr aufweist, und dass in der Stirnseite 15 des Bohrers 1 mindestens eine Öffnung 21 vorgesehen ist, aus welcher das Kühl-/Schmiermittel austreten kann. Vorzugsweise ist der Öffnung 21 diametral gegenüberliegend eine weitere Öffnung vorgesehen. Die Anzahl der Öffnungen ist vorzugsweise an die Anzahl der in jedem Schneidbereich vorhandenen Schneiden angepasst.

Der Seitenansicht gemäß Figur 1 ist zu entnehmen, dass die erste Schneide 9 eine Spanfläche 23 aufweist, auf welcher von der Schneide 9 abgetragene Späne ablaufen. An die Spanfläche 23 schließt sich eine unter einem Winkel verlaufende Fläche 25 an. Wie üblich weist die erste Schneide 9 einen in Figur 1 nach rechts gerichteten, also in Vorschubrichtung weisenden Schneidabschnitt, die Hauptschneide, und einen in radialer Richtung gegenüber der Mittelachse 5, also in Umfangsrichtung weisenden Schneidabschnitt, die Nebenschneide, auf. Auf der Spanfläche 23 laufen von diesem beiden Schneidabschnitten abgetragene Späne ab.

Von der ersten Schneide 9 abgetragene Späne gelangen in eine erste Spannut 27 und werden über diese aus dem ersten Schneidbereich 7 abtransportiert. Dieselbe Spannut führt auch Späne ab, die von der zweiten Schneide 13' von einem Werkstück abgetragen werden.

Entsprechend werden Späne, die von der der ersten Schneide 9 gegenüberliegenden ersten Schneide 9' abgetragen werden, über eine zweite Spannut 29 aus dem Bearbeitungsbereich abgeführt, die auch Späne abführt, die von der zweiten Schneide 13 abgetragen werden.

Es zeigt sich, dass bei dem hier dargestellten Ausführungsbeispiel des Bohrers 1 die Spannuten 27 und 29 jeweils Späne abführen, die von den Schneiden 9, 9', beziehungsweise 13, 13' des ersten und zweiten Schneidbereichs 7 beziehungsweise 11 abgetragen werden.

Aus der hier gewählten Darstellung wird deutlich, dass die erste Schneide 9, ebenso wie die gegenüberliegende Schneide 9', mit der Mittelachse 5 einen auch als Senkwinkel α bezeichneten Winkel einschließt. Es zeigt sich, dass bei der Bearbeitung eines Werkstücks eine mittels des zweiten Schneidbereichs 11 bearbeitete oder erzeugte Bohrung in einem Werkstück um die Schnitttiefe A vergrößert wird, also um einen Bereich, der sich dadurch ergibt, dass der radiale Abstand der ersten Schneide 9 gegenüber der Mittelachse 5 größer ist als der radiale Abstand der zweiten Schneide 13 gegenüber der Mittelachse 5.

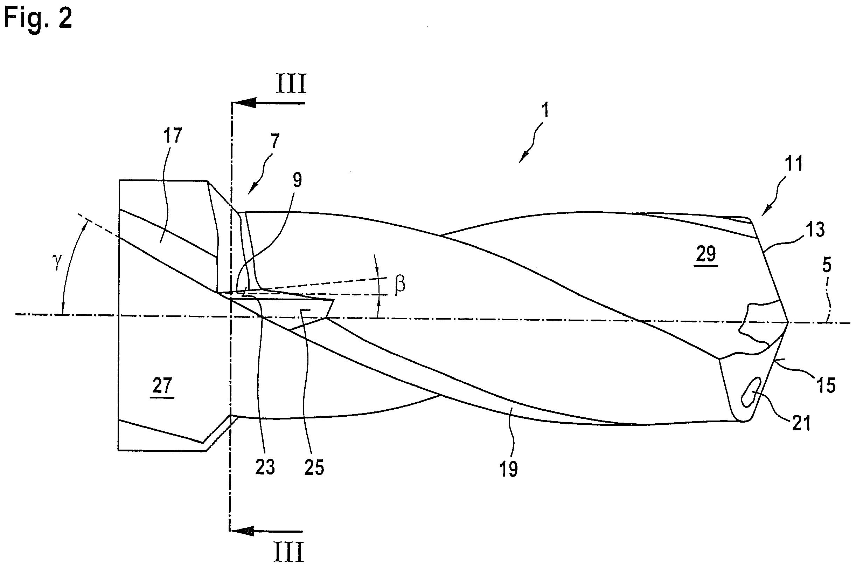

Figur 2 zeigt in starker Vergrößerung wiederum das erste Ausführungsbeispiel des Bohrers 1 in Seitenansicht, allerdings ist dieser gegenüber der Darstellung in Figur 1 verdreht, sodass die erste Schneide 9 des ersten Schneidbereichs 7 nunmehr dem Betrachter zugewandt ist.

Im Folgenden werden gleiche und funktionsgleiche Teile mit identischen Bezugszeichen versehen, sodass insofern auf die Beschreibung zu Figur 1 verwiesen wird, um Wiederholungen zu vermeiden.

Auch in Figur 2 ist die Spanfläche 23 der ersten Schneide 9 zu erkennen, außerdem die sich daran anschließende, einen Winkel mit der Spanfläche 23 einschließende Fläche 25.

Von der ersten Schneide 9 des ersten Schneidbereichs abgetragene Späne laufen über die Spanfläche 23 ab und gelangen in die zugehörige der Spanabfuhr dienende Spannut 27, die auch Späne aufnimmt, die von der zweiten Schneide 13' des zweiten Schneidbereichs 11 von einem Werkstück abgetragen werden. Entsprechend nimmt, wie oben gesagt, die Spannut 29 die Späne der ersten Schneide 9' und der zweiten Schneide 13 auf.

Figur 2 ist zu entnehmen, dass die von der ersten Schneide 1 ausgehende Spanfläche 23 gegenüber der Mittelachse 5 unter einem Winkel angeordnet ist, der als axialer Spanwinkel β bezeichnet wird. Es wird deutlich, dass die Spanfläche 23 hier gegenüber einer parallel zur Mittelachse 5 verlaufenden Hilfslinie gegen den Uhrzeigersinn verschwenkt ist. Es liegt hier damit ein negativer axialer Spanwinkel β vor.

Bei dem in den Figuren 1 und 2 dargestellten Ausführungsbeispiel des Bohrers 1 ist vorgesehen, dass die Spannuten 27 und 29 wendelförmig ausgebildet sind und mit der Mittelachse 5 einen Drallwinkel γ einschließen, wie er aus Figur 2 ersichtlich ist.

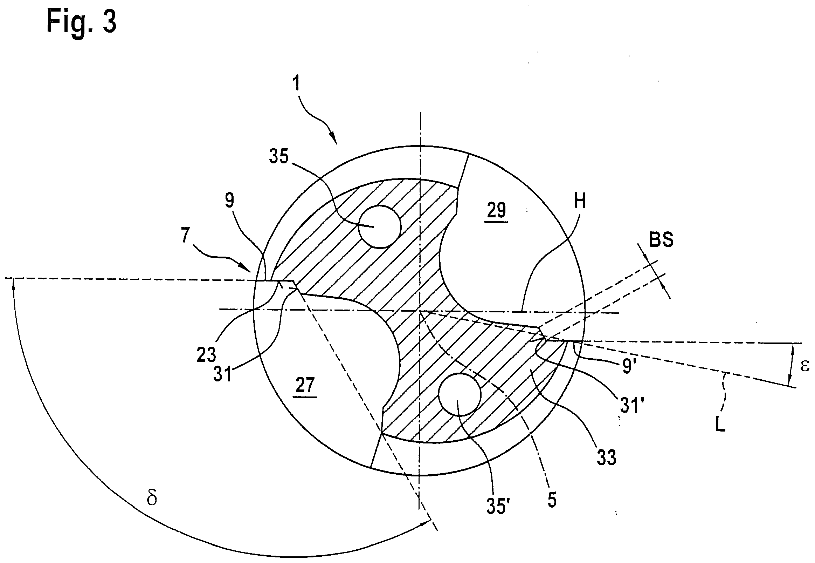

Figur 3 zeigt den Bohrer 1 gemäß Figur 2 im Querschnitt, wobei die Schnittebene entlang der in Figur 2 wiedergegebenen Linie III-III verläuft. Gleiche und funktionsgleiche Teile sind mit identischen Bezugszeichen versehen, sodass insofern auf die vorangegangene Beschreibung der Figuren verwiesen werden kann, um Wiederholungen zu vermeiden.

In der Schnittdarstellung ist links die erste Schneide 9 des ersten Schneidbereichs 7 erkennbar. Diametral gegenüberliegend findet sich die identisch ausgebildete erste Schneide 9' des ersten Schneidbereichs 7'.

An die erste Schneide 9 schließt sich, in die Bildebene von Figur 3 hinein verlaufend, die der ersten Schneide 9 zugeordnete Spanfläche 23 an, die bei der hier wiedergegebenen Schnittdarstellung parallel zu einer gedachten horizontalen Durchmesserlinie H verläuft. Sie geht in eine Schulterfläche 31 über, die mit der Spanfläche 23 einen stumpfen Winkel δ einschließt, welcher als Schulterwinkel bezeichnet wird. Durch die Spanfläche 23 und die angrenzende Schulterfläche 31 wird eine Spanformstufe gebildet, durch die bei der Bearbeitung eines Werkstücks definierte kurze Späne realisiert werden. Die Breite BS der Schulterfläche 31' ist im Bereich der Schneide 9' in Figur 3 mithilfe von zwei Hilfslinien angedeutet. Da die ersten Schneiden 9 und 9' sowie die zugehörigen Flächen identisch sind, ist die Breite BS der Schulterfläche 31 identisch zu der Schulterfläche 31'. Figur 3 gibt auch die Spannuten 27 und 29 wieder.

Aus Figur 3 ist erkennbar, hier erläutert in Zusammenhang mit der ersten Schneide 9', dass die Spanfläche 23 mit einer radialen Hilfslinie L, welche - ausgehend von der senkrecht zur Bildebene von Figur 3 verlaufenden Mittelachse 5 - die radial äußerste Spitze der Schneide 9' schneidet, einen Winkel einschließt, welcher als radialer Spanwinkel ε bezeichnet wird. Erfindungsgemäß wird die Spanfläche 23 der ersten Schneide 9 so angeordnet, dass sich ein positiver radialer Spanwinkel ε ergibt.

Figur 3 gibt noch zwei durch den Grundkörper 33 des Bohrers 1 verlaufende Kühl-/Schmiermittelkanäle 35 und 35' wieder, die in zugehörige Öffnungen 21 in der Stirnseite 15 des Bohrers 1 münden, wie dies in den Figuren 1 und 2 ersichtlich ist.

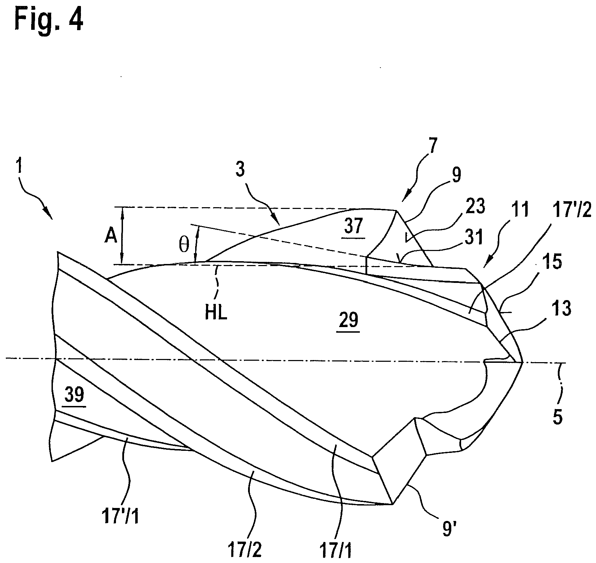

Figur 4 zeigt in Seitenansicht ein zweites Ausführungsbeispiel eines Bohrers, wobei gleichen und funktionsgleichen Teilen identische Bezugszeichen zugeordnet sind, sodass insofern auf die Beschreibung zu den vorangegangenen Figuren 1 bis 3 verwiesen wird.

Das zweite Ausführungsbeispiel des Bohrers 1 weist gemäß Figur 4 einen Werkzeugschaft 3 auf, der links abgebrochen ist. Es kann im weiteren Verlauf des Bohrers 1 also auch noch ein Halteschaft oder dergleichen vorgesehen werden, um ein Drehmoment in den Bohrer 1 einleiten zu können.

Der Bohrer 1 weist einen ersten Schneidbereich 7 und einen in einem axialen Abstand dazu - gemessen in Richtung der Mittelachse 5 - angeordneten zweiten Schneidbereich 11. Von der ersten Schneide 9 des ersten Schneidbereichs 7 abgetragene Späne werden über eine zugehörige dritte Spannut 37 abgeführt. Die von der zweiten Schneide 13 des zweiten Schneidbereichs 11 abgetragenen Späne fließen in der zugehörigen Spannut 29 aus der Bohrung. Entsprechend werden von der ersten Schneide 9' des ersten Schneidbereichs 7 abgetragene Späne über eine zugehörige vierte Spannut 39 abgeführt, die in Figur 4 verdeckt ist, während von der zweiten Schneide 13' des zweiten Schneidbereichs 11 abgetragene Späne über die hier verdeckte Spannut 27 abfließen.

Die Späne der beiden Schneidbereiche 7, 11 können sich somit nicht gegenseitig behindern.

Wesentliches Merkmal dieses Ausführungsbeispiels ist also, dass dem ersten Schneidbereich 7 und dem zweiten Schneidbereich 11 separate Spannuten 37, 39 und 27, 29 zugeordnet sind.

Figur 4 zeigt noch, dass der hier dargestellte Bohrer 1 mehrere Führungsfasen aufweist, nämlich zwei dem Betrachter zugewandte Führungsfasen 17/1 und 17/2, darüber hinaus entsprechende Führungsfasen 17'/1 und 17'/2 auf der dem Betrachter abgewandten Rückseite des Bohrers 1, die hier zum Teil nicht sichtbar sind. Es sind bei diesem Ausführungsbeispiel also vier Führungsleisten vorgesehen.

Auch bei dem in Figur 4 darstellten Ausführungsbeispiel ist also vorgesehen, dass der Bohrer 1 einen zweiten Schneidbereich 11 mit mindestens einer zweiten Schneide 13 umfasst.

Das hier wiedergegebene Ausführungsbeispiel weist, wie das oben beschriebene Ausführungsbeispiel, eine der ersten Schneide 9 gegenüberliegende Schneide 9' und eine, hier verdeckte, der zweiten Schneide 13 gegenüberliegende Schneide auf. Im ersten und zweiten Schneidbereich sind also die sich jeweils paarweise gegenüberliegenden ersten und zweiten Schneiden vorgesehen.

Ein weiterer Unterschied des in Figur 4 dargestellten Ausführungsbeispiels gegenüber dem oben beschriebenen besteht darin, dass der axiale, also in Richtung der Mittelachse 5 gemessene, Abstand zwischen dem ersten Schneidbereich 7 und dem zweiten Schneidbereich 11 kleiner ist.

Figur 4 gibt außer der Spanfläche 23 noch die Schulterfläche 31 wieder, welche gemeinsam mit der Spanfläche 23 eine der ersten Schneide 9 zugeordnete Spanformstufe bildet. Eine entsprechende Spanformstufe ist bei der gegenüberliegenden ersten Schneide 9' vorgesehen.

Die Schulterfläche 31 schließt vorzugsweise mit einer gedachten horizontalen Linie einen Winkel θ ein, der sich - in Figur 4, also von der Stirnseite aus gesehen - nach links öffnet. Mit anderen Worten: Die Schulterfläche 31 verläuft unter einem spitzen Neigungswinkel θ gegenüber der Mittelachse 5. Durch diese Ausgestaltung ist sichergestellt, dass von der ersten Schneide 9 abgetragene Späne in Richtung auf die Mittelachse 5 geführt und abgelenkt werden.

Diese Neigung der Schulterfläche 31 ist vorzugsweise auch bei dem ersten Ausführungsbeispiel gegeben, welches anhand der Figuren 1 bis 3 erläutert wurde.

Der in radialer Richtung gegenüber der Mittelachse 5 gemessene Abstand der radialen äußeren - in Figur 4 oberen - Kante der ersten Schneide 9 zu einer horizontalen Hilfslinie HL wird als Schnitttiefe A definiert, die auch in Figur 1 angedeutet ist.

Die Schnitttiefe A gibt an, um wie viel eine mittels des zweiten Schneidbereichs 11 bearbeitete oder erzeugte Bohrung durch Bearbeitung der Bohrung mit dem ersten Schneidbereich 7 aufgeweitet wird.

Auch bei dem in Figur 4 dargestellten Ausführungsbeispiel kann der zweite Schneidbereich 11 im Bereich der Stirnseite 15 des Bohrers 1 so ausgestaltet werden, dass mit dem Bohrer 1 ins Volle gearbeitet werden kann. Denkbar ist es aber auch, den zweiten Schneidbereich 11 so auszugestalten, dass er zum Aufbohren einer bereits bestehenden Bohrung verwendet wird. Mit dem zweiten Schneidbereich 11 wird dann die bestehende Bohrung aufgebohrt.

Werden die Bohrer 1 nach den Figuren 1 bis 3 und gemäß Figur 4 vollständig durch ein zu bearbeitendes Werkstück hindurchgeführt, so wirken der zweite Schneidbereich 11 und der erste Schneidbereich 7 als Aufbohrer. Wird der Bohrer 1 nur über einen kürzeren Vorschubweg in das Werkstück eingefahren, so wird durch den zweiten Schneidbereich 11 eine Bohrung erzeugt beziehungsweise aufgeweitet und diese durch den zweiten Schneidbereich 11 um die Schnitttiefe A weiter vergrößert. Dabei entsteht eine Stufenbohrung.

Es ist also möglich, den hier beschriebenen Bohrer 1 als Stufen- oder Aufbohrwerkzeug einzusetzen.

Insbesondere bei der Bearbeitung von langspanenden Werkstoffen werden die von den dem Werkstück abgetragenen Späne von der durch die Spanfläche 23 und die angrenzende Schulterfläche 31 realisierten Spanformstufe gebrochen, sodass definierte kurze Späne entstehen, die ohne Weiteres über die Spannuten 27 und 29 des Bohrers 1 abgeführt werden können.

Wesentlich ist, dass der Bohrer 1 auch ausschließlich mit einem ersten Schneidbereich 7 und mit mindestens einer zugehörigen ersten Schneide 9 eines ersten Schneidbereichs 7 ausgestaltet werden kann, wobei auf den zweiten Schneidbereich 11 mit der mindestens einen zweiten Schneide 13 vollständig verzichtet wird. Dabei kann die sich dann ergebende Stirnseite des Bohrers 1 so ausgebildet werden, dass der erste Schneidbereich 7 eine bereits bestehende Bohrung aufweitet, also eine Aufbohrstufe bildet, oder aber dass mit dem Bohrer 1 ins Volle gearbeitet wird.

Entscheidend für die positiven Eigenschaften des Bohrers 1, wie er in den Figuren 1 bis 4 dargestellt ist, ist die Spanformstufe, bei der die Schulterfläche 31 unter einem spitzen Neigungswinkel θ gegenüber der Mittelachse 5 des Bohrers 1 verläuft, sodass von der mindestens einen ersten Schneide 9 beziehungsweise auch von einer gegenüberliegenden identischen ersten Schneide 9' abgetragene Späne in Richtung auf die Mittelachse 5 abgelenkt werden.

Bezüglich der mindestens einen ersten Schneide 9 wurde festgehalten, dass diese einen ersten in Vorschubrichtung gerichteten Schneidabschnitt aufweist, der als Hauptschneide bezeichnet wird, und einen zweiten Schneidabschnitt, der sich im Bereich der Umfangsfläche des Bohrers 1 befindet. Besonders bevorzugt wird vorgesehen, dass der orthogonal zu dieser Hauptschneide der ersten Schneide 9 gemessene Spanwinkel der Spanfläche 23 positiv ist, weil dadurch die Schnittkräfte reduziert werden und sich gute Oberflächeneigenschaften für die bearbeitete Bohrung ergeben.

Aus Figur 3 ist überdies ersichtlich, dass der radiale Spanwinkel ε positiv ist. Besonders gute Bearbeitungsergebnisse haben sich dann ergeben, wenn der radiale Spanwinkel ε mindestens 10° beträgt.

Gute Bearbeitungseigenschaften bei Einsatz des hier beschriebenen Bohrers 1 haben sich insbesondere dann ergeben, wenn die Breite BS der Schulterfläche 31, wie sie in Figur 3 dargestellt ist, mindestens 25 % der aus den Figuren 1 und 4 ersichtlichen Schnitttiefe A ausmacht.

Der von der Spanfläche 23 und der Schulterfläche 31 eingeschlossene Schulterwinkel δ wird so gewählt, dass er einerseits größer ist als 100°, andererseits aber kleiner als die Differenz zwischen 180° und dem Senkwinkel α. Vorzugsweise wird also der Schulterwinkel δ so gewählt, dass Folgendes gilt: 100° ≤ δ ≤ 180°.

Bei einem erfindungsgemäßen Bohrer 1, wie er in den Figuren 1 bis 4 dargestellt ist, hat sich für einen Senkwinkel α unter 90° Folgendes ergeben: Von der mindestens einen ersten Schneide 9 abgetragene Späne werden umso stärker in Richtung auf die Mittelachse 5 geführt, je negativer der axiale Spanwinkel β und je positiver der radiale Spanwinkel ε sind.

Bei einem besonders bevorzugten Ausführungsbeispiel ist bei einem Senkwinkel α von 45° ein Schulterwinkel δ von 135° vorgesehen, ein radialer Spanwinkel ε von +15° und ein axialer Spanwinkel β von -2°. Auf diese Weise lassen sich besonders kurze Späne realisieren, auch wenn langspanende Materialien mit einem hier angesprochenen Bohrer bearbeitet werden. Besonders bevorzugt wird ein Bohrer der hier angesprochenen Art mit einer Schulterfläche 31 realisiert, deren in Figur 4 wiedergegebener Neigungswinkel θ in einem Bereich von -10° ≤ θ ≤ +10° liegt. Besonders bevorzugt wird ein Neigungswinkel θ, der im Bereich von -5° ≤ θ ≤ +5° liegt.

Besonders bewährt haben sich auch Schulterwinkel δ, die in einem Bereich von 100° ≤ δ ≤ 160° liegen.

In Zusammenhang mit dem Schulterwinkel θ wird vorzugsweise folgendes Verhältnis gewählt: Je kleiner der Senkwinkel α ist, umso größer sollte der Schulterwinkel δ sein, damit lange Späne sicher vermieden werden.

Die hier beschriebene Spanstufe, die durch die Spanfläche 23 und durch die Schulterfläche 31 gebildet wird, führt auch und insbesondere bei der Bearbeitung langspanender Werkstoffe dazu, dass die von dem ersten Schneidbereich 7 beziehungsweise der mindestens einen ersten Schneide 9 abgetragenen Späne so in Richtung auf die Mittelachse 5 umgelenkt werden, dass kurze definierte Späne entstehen und nicht langgestreckte Späne, die sich um den Bohrer 1 wickeln könnten.

Bei den anhand der Figuren 1 bis 4 beschriebenen Ausführungsbeispielen eines Bohrers 1 wirkt sich die hier erläuterte Spanstufe jedoch besonders vorteilhaft aus, weil gerade beim Aufbohren und bei der Erzeugung von Stufenbohrungen in Werkstücken aus langspanenden Materialien üblicherweise lange Späne entstehen, die sich häufig zu einem kompakten Knäuel verbinden. Dies führt zu einem Ausbruch der mindestens einen ersten Schneide oder gar zu einem Bruch des Bohrers 1. Durch die hier erläuterte Spanstufe wird dieser Nachteil sicher vermieden.

## Patentansprüche

1. Bohrer mit
- einem Werkzeugschaft (3),
- einer Mittelachse (5),
- einem ersten Schneidbereich (7) mit mindestens einer geometrisch definierten, eine Spanfläche (23) aufweisenden ersten Schneide (9;9'), die in einem radialen Abstand zur Mittelachse (5) des Bohrers (1) angeordnet ist, wobei
- die erste Schneide (9;9') mit der Mittelachse (5) einen Senkwinkel (α) einschließt, und mit
- einem zweiten Schneidbereich (11) mit mindestens einer geometrisch definierten, eine Spanfläche aufweisenden zweiten Schneide (13;13'), die in einem radialen Abstand zur Mittelachse (5) angeordnet ist,
- wobei der zweite Schneidbereich (11) an der Stirnseite (15) des Bohrers (1) angeordnet ist und der erste Schneidbereich (7) - gemessen in Richtung der Mittelachse (5) - in einem axialen Abstand dazu,
- wobei der radiale Abstand der zweiten Schneide (13;13') zur Mittelachse (5) kleiner ist als der radiale Abstand der ersten Schneide (9;9') der Mittelachse (5), wobei
- eine erste Spannut (27) und eine zweite Spannut (29) vorgesehen sind, und die von der ersten Schneide (9) des ersten Schneidbereichs (7) und die von der zweiten Schneide (13') des zweiten Schneidbereichs (11) abgetragenen Späne von der ersten Spannut (27) abgeführt werden und die Späne der ersten Schneide (9') sowie die Späne der zweiten Schneide (13) von der zweiten Spannut (29) abgeführt werden, oder
- eine erste Spannut (27) und eine zweite Spannut (29) vorgesehen sind, die dem zweiten Schneidbereich (11) zugeordnet sind, und eine dritte Spannut (37) und eine vierte Spannut (39) vorgesehen sind, die dem ersten Schneidbereich (7) zugeordnet sind, und die von dem ersten Schneidbereich (7) abgetragenen Späne und die von dem zweiten Schneidbereich (11) abgetragenen Späne in getrennten Spannuten abgeführt werden, wobei
- der ersten Schneide (9;9') eine Spanformstufe zugeordnet ist, die durch die Spanfläche (23) der ersten Schneide (9;9') und durch eine an die Spanfläche (23) angrenzende und mit dieser einen Schulterwinkel (δ) einschließenden Schulterfläche (31) gebildet wird, und wobei
- die Spanfläche (23) unter einem radialen Spanwinkel (ε) gegenüber einer gedachten radialen Linie (L) verläuft, welche die der Spanfläche (23) zugeordnete erste Schneide (9') schneidet,
**dadurch gekennzeichnet, dass**
- der Schulterwinkel (δ) größer als 90°, vorzugsweise größer als 100° ist, dass
- der radiale Spanwinkel (ε) positiv ist, und dass
- die Spanfläche (23) der Spanformstufe unter einem axialen Spanwinkel (β) zur Mittelachse (5) geneigt angeordnet ist, wobei der axiale Spanwinkel (β) negativ gewählt ist.

2. Bohrer nach Anspruch 1, **dadurch gekennzeichnet, dass** der Neigungswinkel (θ) der Schulterfläche (31) der Spanformstufe einen Wert in einem Bereich von -10° ≤ θ ≤ +10°, vorzugsweise von -5° ≤ θ ≤ +5° gewählt wird.

3. Bohrer nach Anspruch 1 oder 2, **dadurch gekennzeichnet, dass** der erste Schneidbereich (7) unter einem Senkwinkel (α) mit α < 45° zur Mittelachse (5) geneigt ist.

4. Bohrer nach einem der vorhergehenden Ansprüche, **dadurch gekennzeichnet, dass** der Schulterwinkel (δ) in einem Bereich von 100° ≤ δ ≤ 160° gewählt wird.

5. Bohrer nach einem der vorhergehenden Ansprüche, **dadurch gekennzeichnet, dass** der radiale Spanwinkel (ε) mindestens 10° beträgt.

6. Bohrer nach einem der vorhergehenden Ansprüche, **dadurch gekennzeichnet, dass** die Breite (BS) der Schulterfläche (31) mindestens 25 % der Schnitttiefe (A) ausmacht.

7. Bohrer nach einem der vorhergehenden Ansprüche, **dadurch gekennzeichnet, dass** für den Schulterwinkel (δ) Folgendes gilt:100 ≤ δ ≤ 180°.

8. Verwendung eines Bohrers nach einem der vorhergehenden Ansprüche 1 bis 7 als Stufen- oder Aufbohrwerkzeug.

## Claims

1. A drill bit, having
- a tool shank (3),
- a centre axis (5),
- a first cutting region (7) with at least one geometrically defined first cutting edge (9; 9') having a rake face (23), arranged at a radial distance from the centre axis (5) of the drill bit (1), wherein
- the first cutting edge (9; 9') forms a countersink angle (α) with the centre axis (5), and having
- a second cutting region (11) with at least one geometrically defined second cutting edge (13; 13') having a rake face, arranged at a radial distance from the centre axis (5),
- wherein the second cutting region (11) is arranged on the end face (15) of the drill bit (1), and the first cutting region (7) is arranged at a distance therefrom axially - measured along the centre axis (5),
- wherein the radial distance of the second cutting edge (13; 13') from the centre axis (5) is smaller than the radial distance of the first cutting edge (9; 9') from the centre axis (5), wherein
- a first chip flute (27) and a second chip flute (29) are provided, and the chips which are milled out by the first cutting edge (9) of the first cutting region (7), and the chips which are milled out by the second cutting edge (13') of the second cutting region (11), are removed by the first chip flute (27), and the chips from the first cutting edge (9'), as well as the chips from the second cutting edge (13), are removed by the second chip flute (29), or
- a first chip flute (27) and a second chip flute (29) are provided, and are assigned to the second cutting region (11), and a third chip flute (37) and a fourth chip flute (39) are provided, the same assigned to the first cutting region (7), and the chips which are milled out by the first cutting region (7), and the chips which are milled out by the second cutting region (11), are removed in separate chip flutes, wherein
- a chip shaping stage is assigned to the first cutting edge (9; 9'), formed by the rake face (23) of the first cutting edge (9; 9') and by a shoulder surface (31) adjoining the rake face (23) and forming a shoulder angle (δ) with the same, and wherein
- the rake face (23) runs at a radial rake angle (ε) with respect to an imaginary radial line (L), which cuts the first cutting edge (9'), the same assigned to the rake face (23),
**characterized in that**
- the shoulder angle (δ) is greater than 90°, and preferably greater than 100°, that
- the radial rake angle (ε) is positive, and that
- the rake face (23) of the chip shaping stage is arranged with a slope forming an axial rake angle (β) with respect to the centre axis (5), and the axial rake angle (β) is negative.

2. A drill bit according to claim 1, **characterized in that** the angle of inclination (θ) of the shoulder surface (31) of the chip shaping stage is chosen to have a value in the range from -10° ≤ θ ≤ +10°, and preferably from -5° ≤ θ ≤ +5°.

3. A drill bit according to claim 1 or 2, **characterized in that** the first cutting region (7) has a slope which forms a countersink angle (α) with respect to the centre axis (5), where α < 45°.

4. A drill bit according to one of the previous claims, **characterized in that** the shoulder angle (δ) is chosen in a range from 100° ≤ δ ≤ 160°.

5. A drill bit according to one of the previous claims, **characterized in that** the radial rake angle (ε) is at least 10°.

6. A drill bit according to one of the previous claims, **characterized in that** the width (BS) of the shoulder surface (31) constitutes at least 25% of the radial depth of cut (A).

7. A drill bit according to one of the previous claims, **characterized in that** the following is true for the shoulder angle (δ): 100° ≤ δ ≤ 180°.

8. Use of a drill bit according to one of the previous claims 1 to 7, as a stepped bore or counterbore tool.

## Revendications

1. Foret comportant :
- une tige d'outil (3),
- un axe médian (5),
- une première zone de coupe (7) comportant au moins une première lame (9;9') géométriquement définie, présentant une face de coupe (23), laquelle lame est disposée à écart radial de l'axe médian (5) du foret (1), dans lequel
- la première lame (9;9') comprend avec l'axe médian (5) un angle de fraisure (α), et comportant
- une deuxième zone de coupe (11) comportant au moins une deuxième lame (13;13') géométriquement définie, présentant une face de coupe, laquelle lame est disposée à écart radial de l'axe médian (5),
- dans lequel la deuxième zone de coupe (11) est disposée sur le côté frontal (15) du foret (1) et la première zone de coupe (7) - mesurée en direction de l'axe médian (5) - est disposée à écart axial de celui-ci,
- dans lequel l'écart radial de la deuxième lame (13;13') par rapport à l'axe médian (5) est plus petit que l'écart radial de la première lame (9;9') de l'axe médian (5), dans lequel
- une première rainure à copeaux (27) et une deuxième rainure à copeaux (29) sont prévues, et dans lequel les copeaux enlevés par la première lame (9) de la première zone de coupe (7) et les copeaux enlevés par la deuxième lame (13') de la deuxième zone de coupe (11) sont évacués par la première rainure à copeaux (27) et dans lequel les copeaux de la première lame (9') ainsi que les copeaux de la deuxième lame (13) sont évacués par la deuxième rainure à copeaux (29), ou
- une première rainure à copeaux (27) et une deuxième rainure à copeaux (29) sont prévues, lesquelles sont associées à la deuxième zone de coupe (11), et une troisième rainure à copeaux (37) et une quatrième rainure à copeaux (39) sont prévues, lesquelles sont associées à la première zone de coupe (7), et dans lequel foret les copeaux enlevés par la première zone de coupe (7) et les copeaux enlevés par la deuxième zone de coupe (11) sont évacués dans des rainures à copeaux séparées, dans lequel
- un brise-copeaux est associé à la première lame (9;9'), lequel est formé par la face de coupe (23) de la première lame (9;9') et par une surface d'épaulement (31) adjacente à la face de coupe (23) et comprenant avec celle-ci un angle d'épaulement (δ), et dans lequel
- la face de coupe (23) s'étend selon un angle de coupe (ε) radial par rapport à une ligne radiale (L) imaginaire, laquelle croise la première lame (9') associée à la face de coupe (23),
**caractérisé en ce que**
- l'angle d'épaulement (δ) est supérieur à 90°, de préférence supérieur à 100°, **en ce que**
- l'angle de coupe (ε) radial est positif, et **en ce que**
- la face de coupe (23) du brise-copeaux est disposée de manière inclinée selon un angle de coupe (ß) axial par rapport à l'axe médian (5), l'angle de coupe (ß) axial étant sélectionné de manière négative.

2. Foret selon la revendication 1, **caractérisé en ce que** l'angle d'inclinaison (θ) de la surface d'épaulement (31) du brise-copeaux est sélectionné avec une valeur située dans une plage de -10° ≤ θ ≤ +10°, de préférence de -5° ≤ θ ≤ +5°.

3. Foret selon la revendication 1 ou 2, **caractérisé en ce que** la première zone de coupe (7) est inclinée selon un angle de fraisure (α) avec α < 45° par rapport à l'axe médian (5).

4. Foret selon l'une quelconque des revendications précédentes, **caractérisé en ce que** l'angle d'épaulement (δ) est sélectionné dans une plage de 100° ≤ δ ≤ 160°.

5. Foret selon l'une quelconque des revendications précédentes, **caractérisé en ce que** l'angle de coupe (ε) radial est d'au moins 10°.

6. Foret selon l'une quelconque des revendications précédentes, **caractérisé en ce que** la largeur (BS) de la surface d'épaulement (31) représente au moins 25 % de la profondeur de coupe (A).

7. Foret selon l'une quelconque des revendications précédentes, **caractérisé en ce que** pour l'angle d'épaulement (δ), ce qui suit est valable : 100° ≤ δ ≤ 180°.

8. Utilisation d'un foret selon l'une quelconque des revendications précédentes 1 à 7 en tant qu'outil étagé ou outil d'alésage.
